# EUROPEAN PATENT SPECIFICATION

(11) **EP 0 672 345 B1**
(45) Date of publication and mention of the grant of the patent: **03.06.1998**
(21) Application number: 95103674.8
(22) Date of filing: 14.03.1995
(51) Int. Cl.: A01K 89/01, A01K 89/015

(54) **Reversal preventive device for fishing reel**
Rücklaufsperre fur Angelwinde
Dispositif anti-retour pour moulinet de pêche

(30) Priority: 14.03.1994 JP 69112/94
(43) Date of publication of application: 20.09.1995
(73) Proprietor: DAIWA SEIKO INC., Higashikurume-shi, Tokyo (JP)
(72) Inventor: Hirano, Kazuo, Niiza-shi, Saitama (JP)
(74) Representative: Grünecker, Kinkeldey, Stockmair & Schwanhäusser Anwaltssozietät

(56) References cited:
- EP-A- 0 573 992

## Description

### BACKGROUND OF THE INVENTION

The present invention relates to a reversal preventive device for a fishing reel.

As a device for preventing the reversed rotation, i.e. the rotation in a fishline play-out direction opposite to the fishline take-up direction, Japanese Utility Model Kokai Publications No. Sho. 64-38963 and Hei. 4-80362 disclose a device which makes use of the wedge action of rolling members to thereby minimize the degree of idle rotation of a rotary member to be prevented against the reversed rotation.

The reversal preventive device disclosed in these publications is equipped with a one-way clutch having rolling members and an outer race for holding the rolling members, which is fitted onto a rotary shaft rotatable in linking with the rotation of the handle. In the reverse rotation of the handle, the outer race of the one-way clutch or an inner race thereof in sliding fit with the rolling members is prevented against rotation, so as to prohibit the handle from being rotated in the reverse direction with little idle rotation.

Japanese Patent Kokai Publication No. Sho. 54-141285 discloses another type of the reverse rotation preventive device, in which a bearing guide having a guide groove into which bearing members such as rollers can be movably fitted is fixed to the front portion of a reel main body, a restrict plate is rotatably supported in front of the bearing guide to prevent the bearing members from being removed forwardly and, further, a plurality of securing pieces are provided on the restrict plate to change over the bearing members between the wedge and non-wedge action positions.

In the reversal devices respectively disclosed in the former two publications, since the components thereof are put superimposingly on the rotary shaft, the structure is complicated, which provides a poor efficiency in assembling as well as in dismantling, and also which is not favorable in terms of durability. In addition, in order to switch the reversal preventive device between the wedge and non-wedge action positions, a securing pawl must be radially moved to engage with or disengage from the securing portion of the outer periphery of the outer or inner race, which requires a space in the radial direction so that the reel must be increased in size.

In the reversal preventive device disclosed in the last-mentioned publication, there is employed a structure in which the rolling members are held by the bearing guide and the position of the rolling members in the circumference direction is restricted by the securing pieces respectively provided on the restrict plate. The securing pieces for switching the rolling members between the wedge and non-wedge action positions are formed by folding or bending a plurality of portions of the restrict plate. Thus, the strength and rigidity of the securing pieces are not sufficient, and the dimensional accuracy can not be maintained with respect to the shape of the each securing members. Thus, the wedge action is likely to become unstable, and a smooth and positive wedge action cannot be maintained.

### SUMMARY OF THE INVENTION

In view of the drawbacks found in the above-mentioned reversal preventive devices, it is an object of the invention to provide a reversal preventive device for a fishing reel, which can reduce the degree of the idle rotation at the time the reverse rotation is to be prevented. Another object of the invention is to provide a reversal preventive device which is simple in structure. A further object of the present invention is to stabilize and maintain strength and dimensional precision of components of a reversal preventive device so that the reversal preventive device can perform a smooth and positive wedge action. A device having the features as set forth in the preamble portion of claim 1 is known for example from EP-A-0,573,992.

In order to attain the above-mentioned and other objects, the present invention provides a reverse rotation preventive device for a fishing reel having the features as set forth in the characterising portion of claim 1.

The hold member may be formed as an integral portion of the reel main body or as a separate member to be fixed to the reel main body in place.

The above-mentioned reversal preventive device for a fishing reel is preferably arranged such that the outer frame is engaged with a switch-over member provided on the outside of the reel main body so that the outer frame can be rotationally driven around the hold member by means of the switch-over operation of the switch-over member to be switched over between a position for allowing the rolling members to perform a wedge action and a position for preventing the rolling members from performing the wedge action.

According to the present invention, a structure for holding the rolling member can be simplified, and further, the strength and dimensional precision of the hold structure for holding the rolling members can be stabilized. Therefore, the reversal preventive device of the invention can perform a smooth and positive wedge action. This, in turn, makes it possible to reduce the degree of attempt reverse rotation (idle rotation) of the reel rotary member.

Further, if the reversal preventive device is arranged such that the outer frame for restricting the outward movements of the rolling members is rotationally driven by the switch-over operation of the switch-over member and is thereby switched over the rolling member wedge action and non-wedge action positions, then the reel rotary member can be rotated both forwardly and reversely. Moreover, since there is used no engaging and disengaging mechanism in the radial direction, the reel can be made compact.

If the hold member is formed as a separate part, that is, it is not formed integrally with the reel main body, the hold member is easy to produce. By mounting the thus separately produced hold member to the reel main body, the strength and dimensional precision of the hold member in holding the rolling members during the wedge action of the rolling members can be stabilized as well, to thereby provide a smooth and positive wedge action. This in turn makes it possible to reduce the degree of attempt reverse rotation (idle rotation) of the reel rotary member.

### BRIEF DESCRIPTION OF THE DRAWINGS

Fig. 1 is a partially broken side view of a spinning reel incorporating therein a reversal preventive device according to a first embodiment of the invention.

Fig. 2 is an enlarged section view of the main portions of the reel shown in Fig. 1.

Fig. 3 is a transverse section view taken along the arrow line 3-3 of Fig. 2.

Fig. 4 is a transverse section view, showing a state different from the Fig. 3.

Fig. 5 is a transverse section view showing a modification of the first embodiment.

Fig. 6 is an enlarged section view of the main portions of Fig. 5, showing a different state thereof.

Fig. 7 is an enlarged section view of a reversal preventive device according to a second embodiment of the invention.

Fig. 8 is a partially sectional view of the second embodiment according to the invention.

Fig. 9 is a partially broken view of a reversal preventive device incorporated in a double bearing type reel according to a third embodiment of the invention.

Fig. 10 is an enlarged section view of the main portions of the device shown in Fig. 9.

Fig. 11 is an enlarged section view of the main portions of a modification of the device shown in Fig. 9.

Fig. 12 is a longitudinal section view of the main portions of a reversal preventive device according to a fourth embodiment of the invention.

Fig. 13 is a transverse section view taken along the arrow line 13-13 of Fig. 12.

Fig. 14 is a transverse section view, showing a state of the fourth embodiment different from the state shown in Fig. 13.

Fig. 15 is a partially enlarged view of the fourth embodiment shown in Fig. 12, corresponding to the state shown in Fig. 14.

Fig. 16 is a further partially enlarged view, corresponding to the state shown in Fig. 13.

Fig. 17 is a further partially enlarged view of Fig. 15.

Fig. 18 is a view of a modification of the fourth embodiment.

Fig. 19 is a longitudinal section view taken along the arrow line 19-19 of Fig. 18.

Fig. 20 is a longitudinal section view of the main portions of a further modification of the fourth embodiment.

Fig. 21 is a transverse section view taken along the arrow line 21-21 of Fig. 20.

Fig. 22 is a view of a still further modification of the fourth embodiment.

### DETAILED DESCRIPTION OF THE PREFERRED EMBODIMENT

Now, description will be given below in more detail of the embodiments of a reversal preventive device according to the invention with reference to the accompanying drawings.

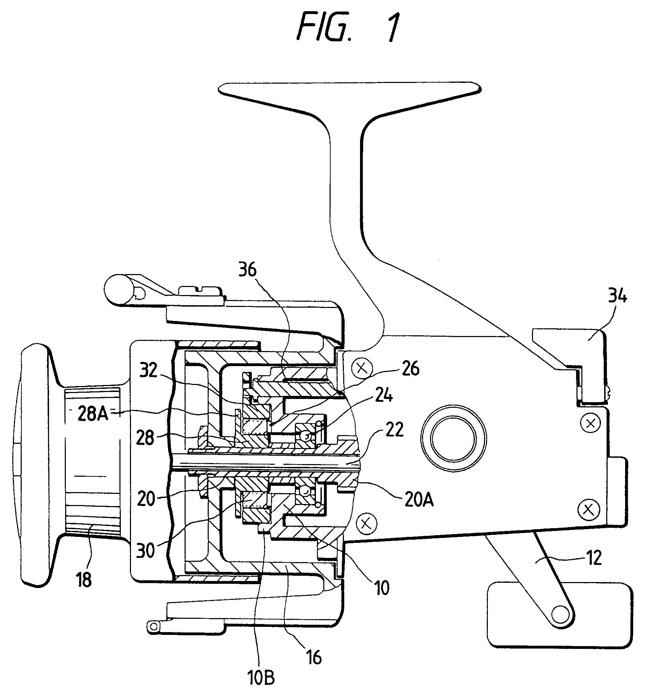

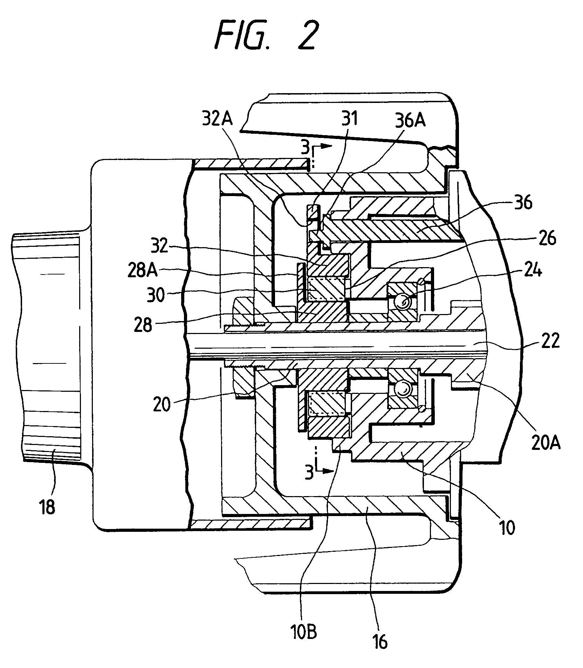

In particular, Figs. 1 and 2 respectively show a spinning reel incorporating a reversal preventive device according to a first embodiment of the invention. If a handle 12 is rotated, then the force of the handle 12 is transmitted through a drive gear (not shown) to a pinion gear 20A integrally formed on a cylindrical shaft 20, so that a rotor 16 fixed to a cylindrical shaft 20 is rotated. The cylindrical shaft 20 is supported by a bearing 24. At the same time, a spool shaft 22 inserted into the cylindrical shaft 20 slides back and forth by a well known mechanism to thereby move a spool 18 back and forth, so that a fishline can be wound around the spool 18 uniformly.

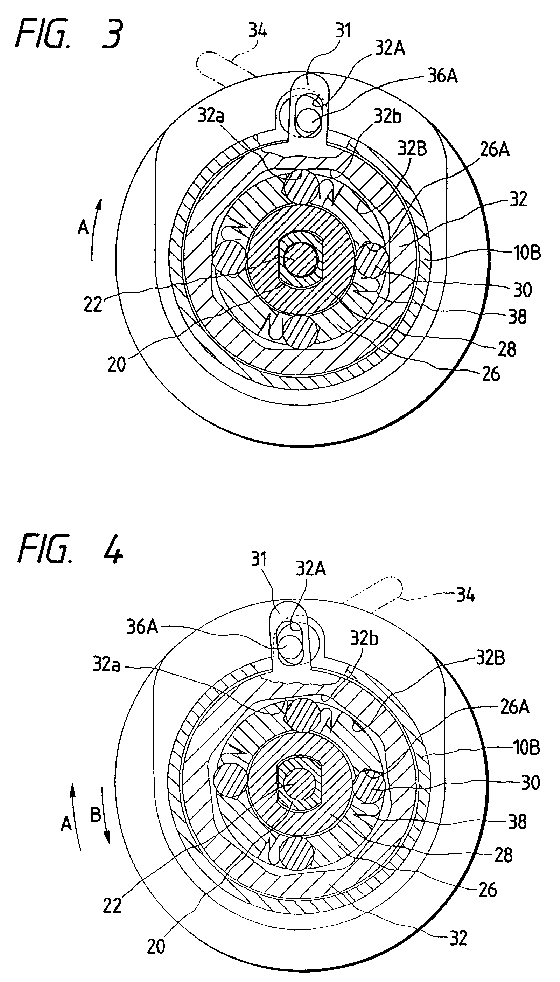

The reel main body 10 includes in the front end portion thereof an annular projecting part, namely a hold member 26 which is an integral portion of the front end portion of the reel main body 10 and arranged concentrically with the cylindrical shaft 20. As shown in Figs. 3 and 4, the hold member 26 includes four hold holes 26A each passing through the hold member 26 to communication the inner and outer peripheral sides of the hold member 26 with each other. Four cylindrical rolling members 30 are disposed in their respective hold holes 26A. Each rolling member 30 may be formed in a spherical shape besides the cylindrical shape. It should be noted that this applies similarly to the following embodiments as well. Since the rolling members 30 are held, in a circumferential direction, by the hold member 26 which is formed as an integral portion of the front end portion of the reel main body 10, it is possible to stably hold the rolling members 30 with desired strength and precision, to thereby enable a smooth wedge action. This also make it possible to simplify the structure of the holding mechanism.

An inner race member 28, which is disposed on the inner peripheral side of the hold member 26, is secured to the cylindrical shaft 20 in such a manner that it is rotated together with the cylindrical shaft 20. The inner race member 28 is formed with a flange portion 28A. The flange portion 28A and the front end portion of reel main body 10 cooperatively prevent the rolling members 30 form being moved (or removed) in the back and forth direction.

On the outer peripheral side of the hold member 26, an outer frame 32 is disposed concentrically with the cylindrical shaft 20 such that the outer frame 32 can be guided and rotated by another annular projecting portion 10B formed in the reel main body. The outer frame 32 includes a projection 31 having an elongated engaging hole 32A formed therethrough. A switch-over member 34 is provided outside the reel main body 10, and a longitudinal shaft 36 is connected to the switch-over member 34. In the leading end portion of the longitudinal shaft 36, there is provided an engaging portion 36A which has a diameter substantially equal to the width of the above-mentioned engaging hole 32A and also which is inserted into the engaging hole 32A. The engaging portion 36A is eccentric with respect to the center of the longitudinal shaft 36.

In the hold member 26, there are formed four hold holes 26A in such a manner that they are spaced at 90 degrees apart from one another in the circumstantial direction of the hold member 26, while the four rolling members 30 are disposed in their respective hold holes 26A. Also, each rolling member 30 is always energized by a plate spring 38 counterclockwise in Figs. 3 and 4. The outer frame 32, which is used to restrict the outward movements of the respective rolling members 32, has an inner periphery which is formed in a shape obtained by rounding the respective corner portions of a regular octagon.

Therefore, when the outer frame 32 is held at a position shown in Fig. 3, the inner peripheral sides of the respective rolling members 30 are in contact with the outer peripheral portions of the inner race member 28, while the outer peripheral sides thereof are in contact with their respective opposing central portions 32a of the sides of the octagon of the inner periphery of the outer frame 32. In this case, if the cylindrical shaft 20 is going to rotate in a direction of an arrow line A shown in Fig. 3 (in a fishline take-up direction, or, in a forward direction), then the rolling member 30 is slightly moved against the energizing force of the plate spring 38 and is rotatable there. Consequently, the cylindrical shaft 20 can be rotated in the arrow line A direction, which makes it possible to take up a fishline.

In contrast, if the cylindrical shaft 20 attempts to rotate in a reverse direction (in a fishline play-out direction), the rolling members 30 are pushed against the walls of their respective hold holes 26A and are thereby prevented from rotating. For this reason, not only the cylindrical shaft 20 but also the inner race member 28 in contact with the rolling members 30 are prevented from rotating, that is, the reverse rotation thereof can be prevented with little idle reverse rotation. In this specification, this action of each of the rolling members 30 is referred to as a wedge action.

If the switch-over member 34 is switched over to a state of Fig. 4, then the longitudinal shaft 36 is rotated and the engaging portion 36A is thereby rotated, which in turn causes the outer frame 32 to rotate through the projection 31, so that the outer frame 32 is turned into a state shown in Fig. 4. That is, each of the rolling members 30 held by the hold member 26 is displaced from a location opposing the central position 32a of the opposing side of the outer frame 32 to a location near the corner portion 32b. Consequently, there are generated slight gaps respectively between the rolling members 30 and the respective inner peripheral portions of the outer frames 32 to allow the rolling members 30 to be rotated in both forward and reverse directions, so that the cylindrical shaft 20 can be rotated in both A and B directions.

As described above, by rotating the outer frame around the hold member by use of the switch-over device, the outer frame can be switched over between the wedge action and non-wedge action positions thereof. Therefore, the present embodiment eliminates the possibility that a useless space can be produced in the radial direction of the outer frame, contributes to the size reduction of the reel, and allows the switch-over operation for reverse rotation.

Also, because the inner peripheral shape of the outer frame 32 is formed on the basis of a regular octagon according to the position angle of the rolling members 30 positioned in the hold member 26 (that is, the equally arranged angle of 90 degrees), the switch-over of the wedge action can be realized by means of the rotational movement of the outer frame 32. In this case, the inner peripheral shape of the outer frame can also be formed in a (regular) square. However, the amounts of projection of the corners of the regular octagon can be made smaller than those of the regular square (that is, the octagon is more approximate to a circle, and the outer peripheral of the octagon can be so set as to have a smaller diameter, which can contribute to the reduced size of the reel. In view of this, the inner peripheral shape of the outer frame 32 can also be formed in a regular dodecagon, a regular sexadecagon (16), or the like. That is, it is preferable that the inner periphery may be formed in a regular polygon which is a multiple of the number of the rolling members 30 which are arranged at an equal angle from one another. However, this is not limitative but, alternatively, the inner periphery may be formed in a shape the elements of which are formed by means of the rotational movements of one element just like a windmill.

And, a structure, which does not include the switch-over device operated by means of the switch-over member 34 and also which is fixed to the state shown in Fig. 3 to permit only the forward rotation of the reel provides an alternative embodiment. In this structure as well, similarly to the above-mentioned embodiment, since the holding of the rolling members 30 in the peripheral direction thereof is carried out by the hold member 26 unified together with the reel main body 10 and fixed with respect to the reel main body, the support of the rolling members 30 can be stabilized in strength and precision to thereby be able to provide a smooth wedge action (to be described later), and a simplified structure can be also obtained.

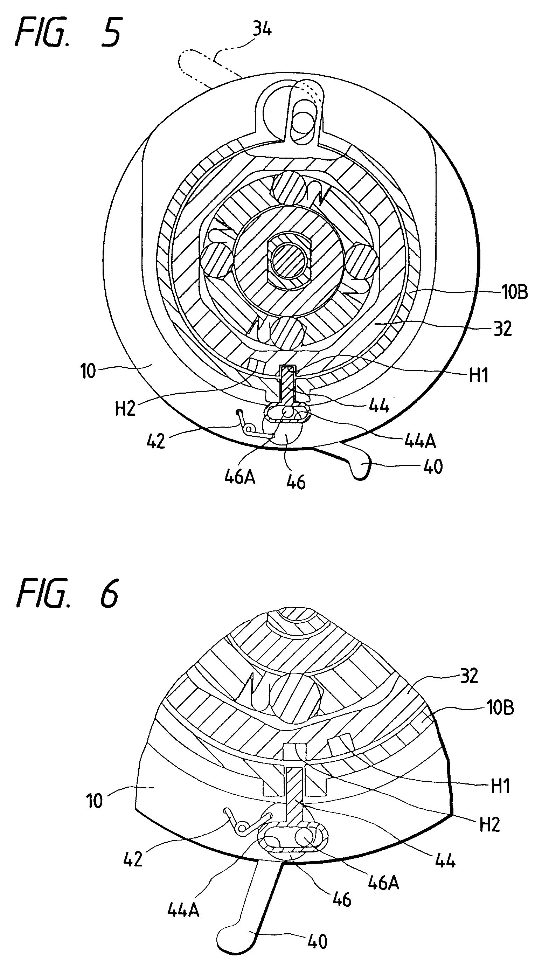

Next, in Figs. 5 and 6, there is shown a device which can hold positively the positions of the outer frame 32 when it is held in the states thereof respectively shown in Figs. 3 and 4. There are formed two holes H1 and H2 at given positions in the outer periphery of the outer frame 32 and a pin member 44, which can be selectively inserted into these two holes H1 and H2, is slidably held by the reel main body 10. The pin member 44 includes an elongated hole 44A formed in the head portion thereof. On the other hand, a lever 40 is provided on the outside of the reel main body and a longitudinal shaft 46 is fixed to the lever 40. And, the longitudinal shaft 46 includes a small-diameter portion 46A at an eccentric position in the leading end portion thereof and the small-diameter portion 46A is inserted into the elongated hole 44A.

Also, there is provided a spring member 42 which is engaged between the longitudinal shaft 46 and the reel main body 10. In this case, the spring member 42 is a torsion coil spring. That is, if the torsion coil spring is deformed beyond the dead point thereof, then the torsion coil spring holds a member to be held by it at the then position on either side thereof and, therefore, in a state shown in Fig. 5 as well, while the pin member 44 is being inserted into and engaged with the hole H1 of the outer frame 32, the state thereof can be held positively. However, the embodiment is not limited to the torsion coil spring, but there can be used another spring of a type that, when the lever 40 is moved from a position shown in Fig. 5 to a position shown in Fig. 6, causes the longitudinal shaft 46 to be rotated and returned to its original position shown in Fig. 5.

Next, if the lever is rotated to the position shown in Fig. 6 against the energizing force of the torsion coil spring 42, then the lever 40 is held again at its rotational position due to the above-mentioned action of the torsion coil spring 42 and the pin member 44 is removed from the hole H1 of the outer frame 32. In this state, if the switch-over member 34 is switched over to rotate the outer frame 32 at a given angle, then the hole H2 of the outer frame 32 is opposed to the pin member 44, as shown in Fig. 6. After then, if the lever 40 is returned again to the position shown in Fig. 5, then the pin member 44 is pushed down by the small-diameter portion 46A of the rotating longitudinal shaft 46 and is engaged into the hole H2, thereby being able to maintain a state which permits rotation in both A and B directions shown in Fig. 4.

Also, according to the spring member 42 which is designed in the latter half of the above description, if the lever 40 is rotated to the position shown in Fig. 6 against the energizing force of the spring member 42 and, in this state, if the outer frame 32 is rotated a given angle into the state shown in Fig. 6 and the lever 40 is released, then the longitudinal shaft 46 is automatically rotated due to the energizing force of the spring member 42 to return to the position shown in Fig. 5, so that the pin member 44 can be engaged into the hole H2.

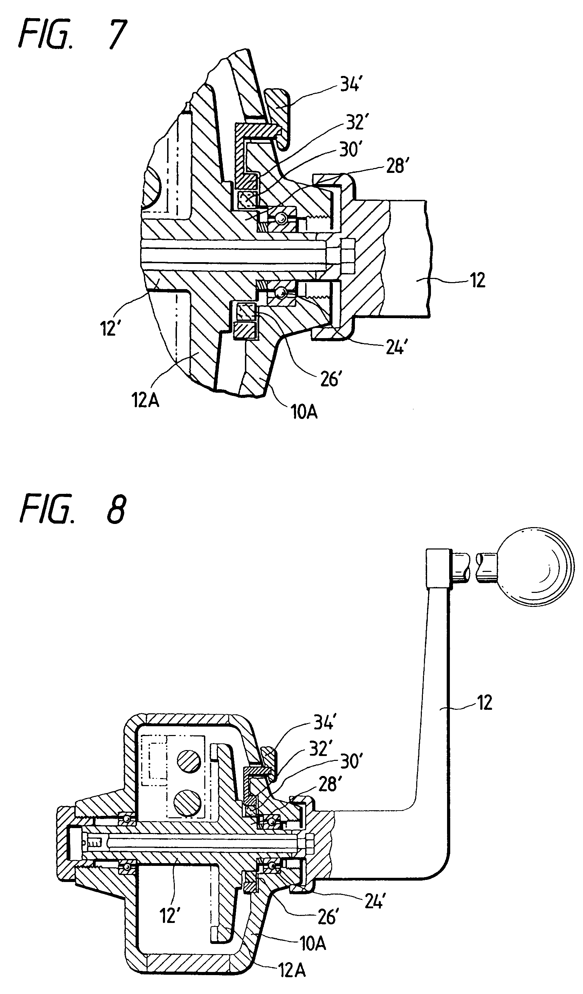

Now, Figs. 7 and 8 respectively show a second embodiment of a reversal preventive device. A reel main body 10 stores therein a drive gear 12A formed integrally with a handle shaft 12' which is rotatable together with a handle 12. The reel main body 10 also includes a gear case 10A which holds a bearing 24', while the handle 12' is rotatably supported by the bearing 24'. A hold member 26' is formed integrally with the gear case 10A concentrically with the handle shaft 12' and, preferably, a cylindrical rolling member 30' is held by a similar structure to the first embodiment. An inner race 28' is formed integrally with the handle shaft 12'.

The movement of the rolling member 30' in the handle shaft direction is restricted by the side surface of the drive gear 12A and by the gear case 10A. And, the outward movement of the rolling member 30' is restricted by an outer frame 32' which has a similar shape to the first embodiment and also which is put on the outer peripheral side of the hold member 26' concentrically with the handle shaft 12'. Also, a switch-over member 34' formed similarly to the first embodiment is provided on the outside of the gear case 10A and, similarly to the first embodiment, by switching over the switch-over member 34', there can be set a state which permits both forward and reverse rotations, or a state which prevents the reverse rotation but allows only the forward rotation.

In order words, when compared with the first embodiment, the second embodiment provides similar action and effect but the reversal preventive device thereof is located at a different place. Also, similarly to the first embodiment, the switch-over device may be omitted to thereby provide a reversal preventive state all the time.

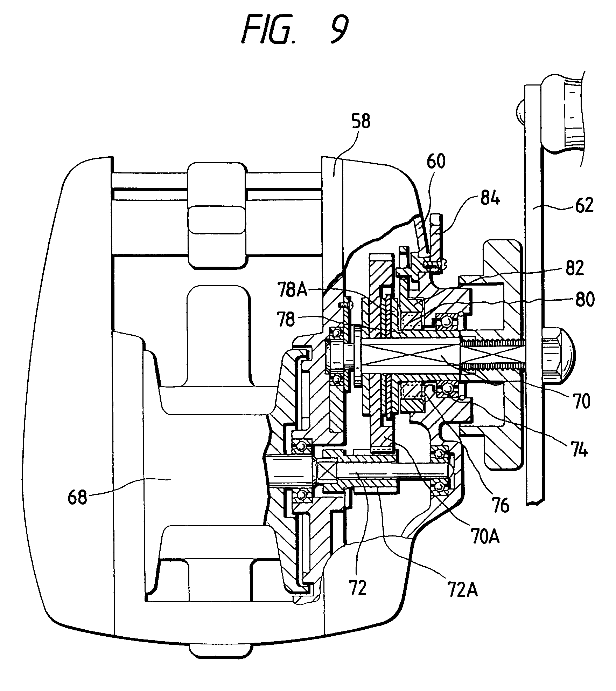

Next, Fig. 9 shows a third embodiment of a reversal preventive device for use in a double bearing type reel. In this embodiment, a handle shaft 70, which is connected with a handle 62, is rotatably supported by a bearing 74 supported by a reel side plate 60, while a drive gear 70A is mounted to the handle shaft 70 in such a manner that it is rotatable together with the handle shaft 70. On the other hand, a pinion gear 72A is mounted to a spool shaft 72 of a spool 68 rotatably supported by a frame member 58 and by the reel side plate 60 in such a manner that it can be rotated together with the spool shaft 72, and the pinion gear 72A is also in mesh with the drive gear 70A. Therefore, if the handle 62 is rotated, then the spool 68 is rotated, so that a fishline can be taken up or played out.

An annular hold member 76 is projectingly provided concentrically with the handle shaft 70 and integrally with the reel side plate 60 that is disposed in the periphery of the handle shaft 70 and forms parts of the reel main body. A cylindrical rolling member 80 having a similar structure to the first embodiment is held by the hold member 76. An inner race 78 is mounted on the inner peripheral side of the hold member 76 in such a manner that it can be rotated together with the handle shaft 70, and the inner race 78 includes a flange portion 78A in one end portion thereof. The movement of the rolling member 80 in the handle shaft direction is restricted by the flange portion 78A and the reel side plate 60.

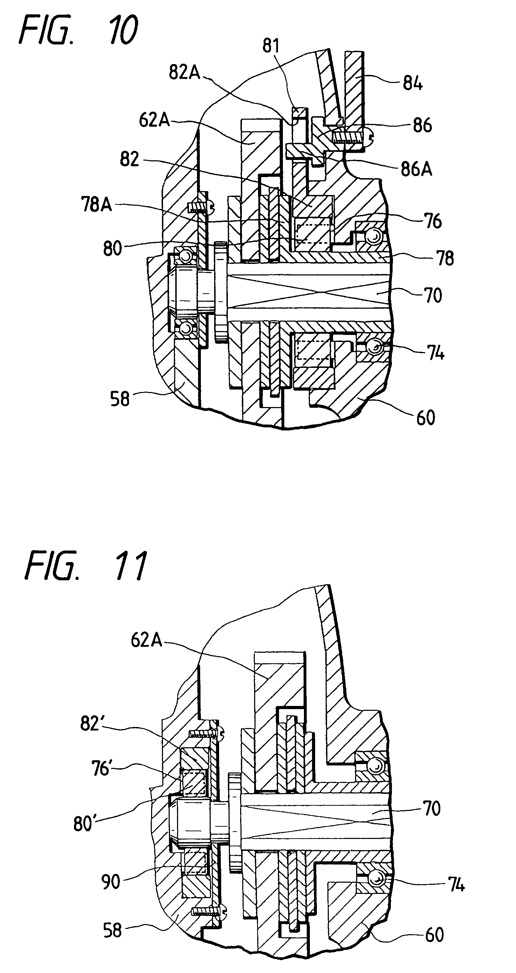

The outward movement of the rolling member 80 is restricted by an outer frame 82 which is disposed concentrically with the above-mentioned handle shaft. The enlarged view of this portion is shown in Fig. 10, in which the outer frame 82 includes a projecting portion 81 provided on the outer periphery thereof, while an elongated hole 82A is formed in the projecting portion 81. On the other hand, a shaft 86 is fixed to a switch-over member 84 which is provided on the outside of the reel side plate 60, and the shaft 86 also includes in the leading end portion thereof an engaging portion 86A which is inserted into and engaged with the elongated hole 82A. The plan view of the present reversal preventive device is similar to Figs. 3 and 4 and, according to the present reversal preventive device, yes or no of reverse rotation can beset by means of the switch-over operation of the switch-over member 84.

The operation and effect of the third embodiment is similar to those of the first embodiment.

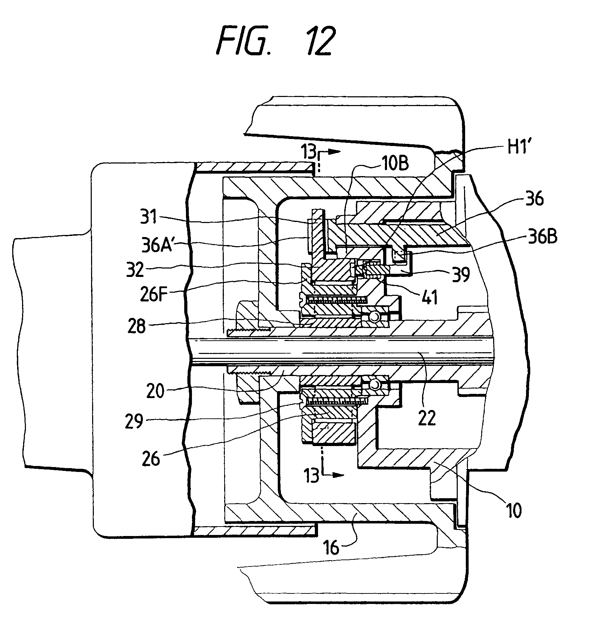

Now, Fig. 11 shows an embodiment in which a reversal preventive device is mounted on the frame member 58 which forms part of the reel main body. That is, in this embodiment, a hold member 76' is formed integrally with the frame member 58, a cylindrical rolling member 80' is held by the hold member 76', the cylindrical end portion of the handle shaft 70 is located on the inner peripheral side of the hold member 76', and the rolling member 80' is in contact with the outer periphery of the cylindrical end portion through an inner peripheral side opening formed in a hold hole similar to the hold hole 26A according to the first embodiment.

Also, an outer frame 82' is disposed on the outer peripheral side of the hold member 76'. The plan view of the outer frame 82' is similar to Fig. 3 of the first embodiment with the switch-over device portion removed therefrom, so that the reverse rotation can be always prevented. However, since a clutch mechanism exists in the double bearing type reel, when the fishline is played out, by disconnecting the clutch, the forward and reverse rotation are both possible and, therefore, there arises no problem in the double bearing type reel even if the reverse rotation is always prevented.

Further, in view of the movement of the rolling member 80' in the handle shaft 70 direction thereof, an annular plate member 90 is fixed to the frame member 58, that is, the movement of the rolling member 80' in the handle shaft 70 direction thereof can be restricted by the plate member 90 and frame member 58.

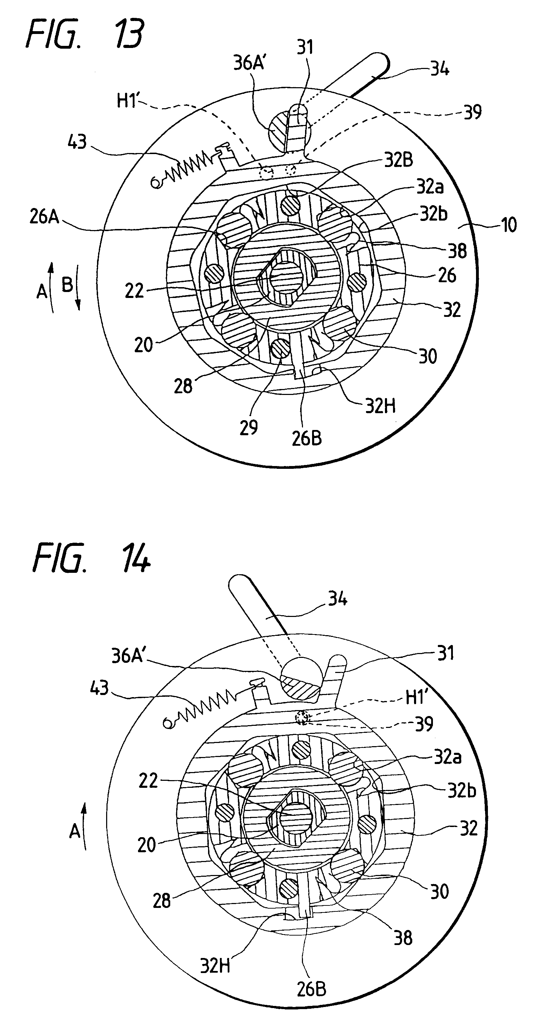

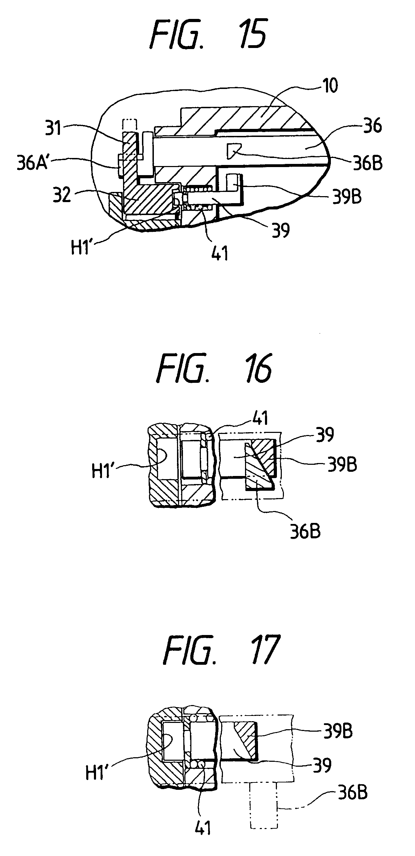

Now, Fig. 12 shows a fourth embodiment of a reversal preventive device for a fishing reel. And, Figs. 13 and 14 are respectively transverse section view taken along the arrow line 13-13 of Fig. 12, while Figs. 15 and 17 are respectively explanatory views of the operation of part of the device. A hold member 26 is mounted to the front portion of the reel main body 10 in such a manner that the hold member 26 holds a rolling member 30. A screw member 29 is used to mount the hold member 26 such that the hold member 26 is formed integrally with the reel main body 10. By forming the hold member 26 integrally with the reel main body 10, the reel main body 10 can be manufactured with more ease.

The remaining portions of the fourth embodiment are similar to the first embodiment. That is, the rolling member 30 is disposed in the hold hole 26A of the hold member 26 in such a manner that it is contactable with the inner race member 28, and is also pushed in the circumstantial direction by the plate spring 38, while the holding of the rolling member 30 in the longitudinal direction thereof is performed by both the front portion of the reel main body 10 and the front portion of the hold member 26 including the flange portion 26F. An outer frame 32 is disposed on the outer peripheral side of the hold member 26 concentrically with the cylindrical shaft 20, and the outer frame 32 also includes a projecting portion 31. And, a coil spring 43 is secured in such a manner as shown in Fig. 13. Further, a longitudinal shaft 36 is connected to a switch-over member 34 provided on the outside of the reel main body, while the longitudinal shaft 36 includes an engaging portion 36A' in the leading end portion thereof.

If the switch-over member 34 is switched over, then the states of the reversal preventive device respectively shown in Figs. 13 and 14 can be switched over into each other. In particular, in the state shown in Fig. 13, the cylindrical shaft 20 is free to rotate in both directions shown by the arrow lines A and B. In the state shown in Fig. 14, the respective rolling members 30 are in contact on the inner peripheral sides thereof with the outer peripheral portions of the inner race member 28, while the outer peripheral sides of the rolling members 30 are in contact with the central portions 32a of the respective sides of the inner peripheral octagon of the outer frame 32. For a reason similar to the first embodiment, the cylinder shaft 20 is allowed to rotate only in the arrow line A direction and is prevented from rotating in a reverse direction, while there is produced little play in the reverse rotation.

As described above, according to the fourth embodiment, since the reversal preventive device is switched over between the wedge action and non-wedge action positions by rotating the outer frame around the hold member by use of the switch-over device, there is not produced any useless space in the radial direction thereof, but yes or no of the reverse rotation can be changed over while contributing to the size reduction of the reel. Also, because the holding of the rolling members 30 in the circumstantial direction thereof is carried out by the hold member which is mounted integrally to the reel main body 10, the holding of the rolling member 30 can be stabilized in strength and precision to thereby provide a smooth wedge action.

In order to hold the above-mentioned reversal preventive position state (Fig. 14) positively, the following device is employed. That is, in the outer frame 32, there is formed an engaging hole H1', so that a securing member 39 supported by the reel main body 10 through a coil spring 41 can be engaged into the engaging hole H1' in the reversal preventive position state. Now, Fig. 15 is an enlarged longitudinal section view of a state in which the securing member 39 is in engagement with the engaging hole H1', Fig. 17 is a further partially enlarged view of Fig. 15, and Fig. 16 is a partially enlarged view of a non-engaged state thereof.

The longitudinal shaft 36 includes in the middle portion thereof a securing projecting portion B which has an inclined surface and is projected out laterally and, on the other hand, the securing member 39 includes a securing portion 39B which has an inclined surface and corresponds to the projecting portion B. If the switch-over member 34 is operated from the state of Fig. 15, that is, from the state of Fig. 14, then the longitudinal shaft 36 is rotated, the securing projecting portion 36B is contacted with the securing portion 39B, and the projecting portion 36B and securing portion 39B cooperate together in pulling out the securing member 39 against the energizing force of the coil spring 41 while their inclined surfaces are kept in contact with each other, so that the switch-over member 34 is turned into the state of Fig. 16, that is, the state of Fig. 13. If the switch-over member 34 is switched over reversely, then the securing member 39 is pushed into the engaging hole H1' due to the energizing force of the coil spring 41 so that the securing member 39 is engaged with the engaging hole H1' (that is, there is provided the state shown in Fig. 14).

The outer frame 32 includes a groove 32H, and the hold member 26 includes on the outer periphery thereof a projecting portion 26B which is projected into the groove 32H. This is a mechanism which, when the state of Fig. 14 is switched over into the state of Fig. 13 by means of the switch-over operation of the switch-over member 34, prevents the outer frame 32 from being rotated too excessively by the coil spring 43.

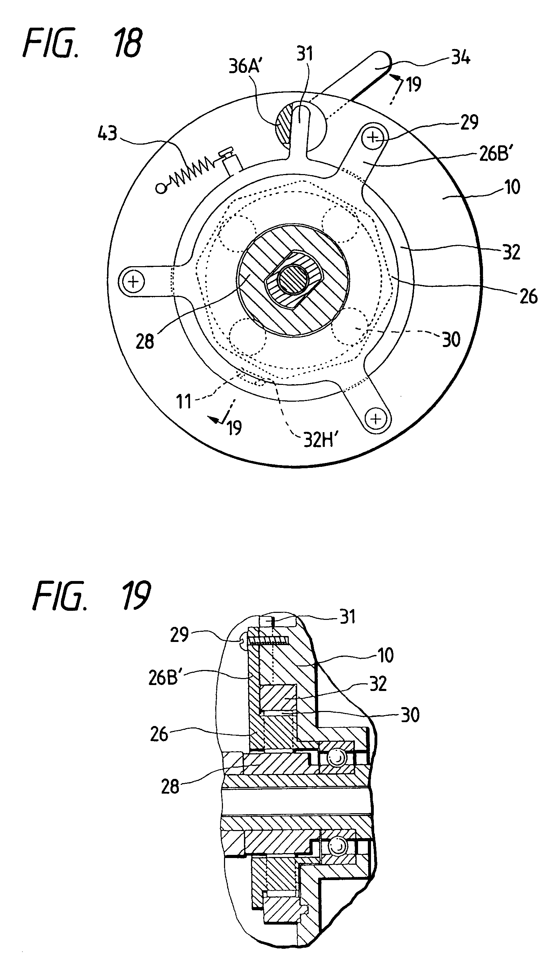

Now, Fig. 18 shows a modification of the fourth embodiment. And, Fig. 19 is a longitudinal section view taken along the arrow line 19-19 of Fig. 18. This modification is different from the fourth embodiment shown in Figs. 12 to 14 in that the integral mounting of the hold member 26 to the reel main body 10 is carried out by a screw member 29 through three projecting portions 26B' respectively projected outwardly. Also, the engaging hole H1' and securing member 39 are omitted and, instead of the projecting portion 26B formed in the hold member 26, a pin member 11 provided on and from the reel main body 10 is projected into a groove 32H' formed in the outer frame 32. That is, the range of rotation of the outer frame 32 is restricted by this means.

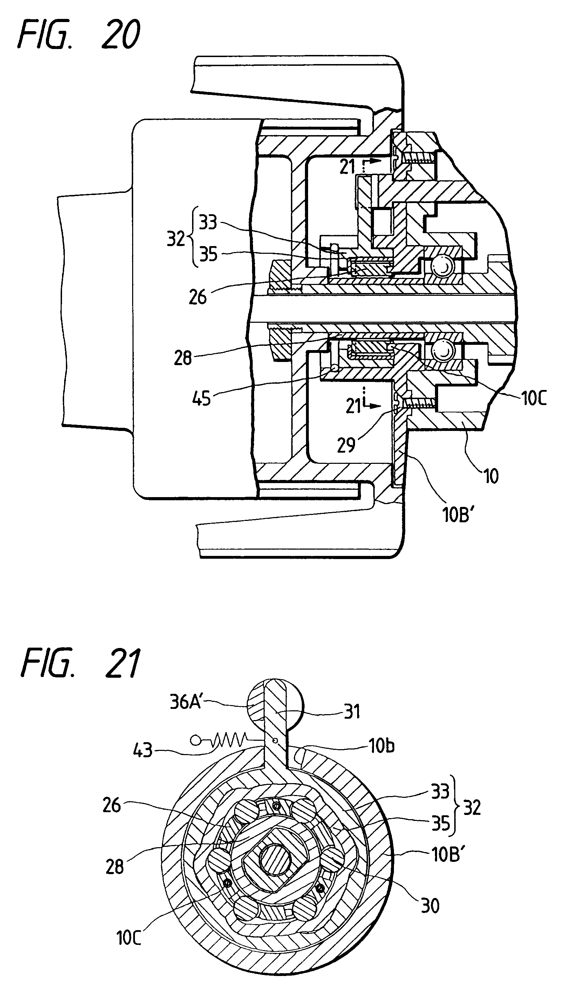

Now, Fig. 20 shows a further modification of the fourth embodiment, and Fig. 21 is a transverse section view taken along the arrow line 21-21 of Fig. 20. In this modification, the reel main body 10 includes in the front portion thereof a storage body 10B' which is formed integrally with the main body front portion for storing a reversal preventive device therein. The storage body 10B' includes in the front portion thereof three projecting portions 10C arranged at an equal distance from one another in the circumstantial direction thereof, and the hold member 26 holding the rolling members 30 is fitted into these projecting portions 10C so that the circumstantial direction of the hold member 26 is fixed in this manner.

The outer periphery of the hold member 26 is covered with a first outer frame 35 and the outer periphery of the first outer frame 35 is further covered with a second outer frame 33 which can be rotated integrally with the first outer frame 35, that is, the second outer frame 33 is guided to the inner surface of the storage body 10B' and is free to rotate within a given range. The second outer frame 33 includes in the front portion thereof a springy ring member 45 provided on the inner periphery of the storage body 10B' and, the ring member 45 is used to position the outer frame 32 and other members in the back and forth direction thereof.

In this modification as well, if the second outer frame 33 is rotated to thereby rotate the first outer frame 35 together with the second outer frame 33, then the reverse rotation can be prevented, or both the forward and reverse rotations can be made possible. That is, if the reversal preventive device is structured in this manner by use of a commercial one-way clutch, then the reversal preventive device can be manufactured easily and at low costs.

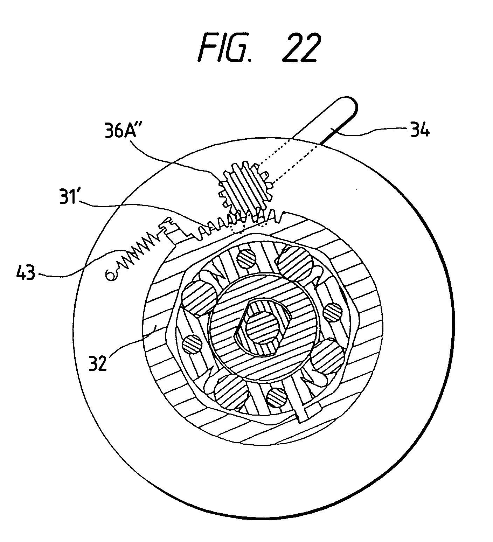

Now, Fig. 22 shows a still further modification of the fourth embodiment. In order to switch over yes or no of the reverse rotation, for example, teeth 31' may be formed on the outer periphery of the outer frame 32, and a gear 36A'' connected with the switch-over member 34 may be meshed with teeth 31'. That is, Fig. 22 shows an example of this structure.

## Claims

1. A reverse rotation preventive device for a fishing reel having a rotary member (16) rotatable in linking with rotation of a handle (12) provided on a reel main body (10), said device comprising:
a hold member (26) arranged concentrically with respect to said rotary member, said hold member having a plurality of hold holes (26A) arranged at intervals circumferentially thereon,
a plurality of rolling members (30) respectively held in said hold holes so as to make contact with said rotary member and said rolling members being adapted to perform a selective wedge-action in cooperation with said hold holes and an outer frame (32) mounted around the outer peripheral surface of said hold member, in order to permit rotation of said rotary member in a first direction and to restrict any radial outward movement of said rolling members when said rotary member is rotated in a second reverse direction, opposite to said first direction,
**characterised in that,**
said hold member (26) is fixedly arranged with respect to said reel main body and said outer frame (32) is rotably mounted,
and that each of said hold holes passes through said hold member so as to communicate both side surfaces of said hold member with each other.

2. A reverse rotation preventive device according to claim 1, wherein said hold member includes an integral portion of said reel main body.

3. A reverse rotation preventive device according to claim 1, wherein said hold member includes a separate member securely fixed to said reel main body.

4. A reverse rotation preventive device according to claim 1, further comprising:
switch-over means for rotationally driving said outer frame relative to said hold member to switch over said rolling member between a first state wherein said rolling members is permitted to perform a wedge action and a second state wherein said rolling members can not perform the wedge action.

5. A reverse rotation preventive device according to claim 1, wherein said hold member is divided by said hold holes into a plurality of arcuate blocks in said circumferential direction, and each of said rolling member is interposed between a corresponding adjacent pair of said arcuate blocks.

## Patentansprüche

1. Rückdrehungs-Verhinderungsvorrichtung für eine Angelspule mit einem Drehteil (16), drehbar in Verbindung mit einer Drehung eines Handgriffes (12) vorgesehen an einem Spulenhauptkörper (10), wobei die Vorrichtung aufweist:
ein Halteteil (26), das konzentrisch in Bezug auf das Drehteil angeordnet ist, wobei das Halteteil eine Mehrzahl von Halteöffnungen (26a) aufweist, die in Abständen in Umfangsrichtung an diesem angeordnet sind,
eine Mehrzahl von Rollelementen (30), die jeweils in den Halteöffnungen gehalten sind, so daß sie in Kontakt sind mit dem Drehteil, und wobei die Rollelemente vorgesehen sind, um eine wahlweise Keilwirkung in Verbindung mit den Halteöffnungen und einem äußeren Rahmen (32) auszuüben, der rund um die äußere Umfangsfläche des Halteteiles angeordnet ist, um eine Rotation des Drehteiles in einer ersten Richtung zu gestatten und jedwede radiale Auswärtsbewegung der Rollelemente zu beschränken, wenn das Drehteil in einer zweiten Gegenrichtung, umgekehrt zu der ersten Richtung, gedreht wird,
**dadurch gekennzeichnet,** daß
das Halteteil (26) fest in Bezug auf den Spulenhauptkörper angeordnet ist und der äußere Rahmen (32) drehbar angeordnet ist,
und daß jede der Halteöffnungen durch das Halteteil so hindurchgeht, daß beide Seitenflächen des Halteteiles miteinander verbunden werden.

2. Rückdrehungs- Verhinderungsvorrichtung nach Anspruch 1, bei der das Halteteil einen einstückigen Abschnitt des Spulenhauptkörpers enthält.

3. Rückdrehungs- Verhinderungsvorrichtung nach Anspruch 1, bei der das Halteteil ein separates Teil enthält, das fest an dem Spulenhauptkörper befestigt ist.

4. Rückdrehungs- Verhinderungsvorrichtung nach Anspruch 1, mit außerdem:
einer Umschalteinrichtung zum rotierenden Antrieben des äußeren Rahmens relativ zu dem Halteteil, um das Rollelement zwischen einem ersten Zustand, in der Rollelemente eine Keilwirkung ausüben können, und einem zweiten Zustand, in dem die Rollelemente keine Keilwirkung ausüben können, umzuschalten.

5. Rückdrehungs-Verhinderungsvorrichtung nach Anspruch 1, bei der das Halteteil durch die Halteöffnungen in eine Mehrzahl von bogenförmigen Blocken in Umfangsrichtung unterteilet ist und jedes der Rollelemente zwischen ein korrespondierend benachbartes Paar der bogenförmigen Blöcke eingesetzt ist.

## Revendications

1. Un dispositif anti-retour pour un moulinet de pêche, comportant un organe rotatif (16) susceptible de tourner en liaison avec la rotation d'une poignée (12) prévue sur un corps principal de moulinet (10), ledit dispositif comprenant :
un organe de maintien (26) disposé concentriquement audit organe rotatif, ledit organe de maintien comportant une pluralité de trous de maintien (26A) agencés à des intervalles circonférentiels sur celui-ci,
une pluralité d'organes de roulement (30) maintenus respectivement dans lesdits trous de maintien, de manière à établir le contact avec ledit organe rotatif et lesdits organes de roulement étant adaptés pour effectuer une action de coincement sélectif en coopération avec lesdits trous de maintien et un cadre extérieur (32) monté autour de la surface périphérique extérieure dudit organe de maintien, de manière à permettre la rotation dudit organe rotatif dans un premier sens de rotation et d'empêcher tout mouvement radial vers l'extérieur desdits organes de roulement lorsque ledit organe rotatif est entraîné en rotation dans un deuxième sens, de retour, opposé audit premier sens de rotation, caractérisé en ce que
ledit organe de maintien (26) est monté fixe par rapport audit corps principal de moulinet et ledit cadre extérieur (32) est monté tournant,
et chacun desdits trous de maintien passe à travers ledit organe de maintien, de manière à faire communiquer ensemble les deux surfaces latérales dudit organe de maintien.

2. Un dispositif anti-retour selon la revendication 1, dans lequel ledit organe de maintien comprend une partie monobloc audit corps principal de moulinet (3).

3. Un dispositif anti-retour selon la revendication 1, dans lequel ledit organe de maintien comprend un organe séparé, fixé de façon rigide audit corps principal de moulinet.

4. Un dispositif anti-retour selon la revendication 1, comprenant en outre :
des moyens de commutation, permettant d'entraîner en rotation ledit cadre extérieur par rapport audit organe de maintien, afin de commuter lesdits organes de roulement entre un premier état dans lequel lesdits organes de roulement peuvent assurer une action de coincement et un deuxième état dans lequel lesdits organes de roulement ne peuvent effectuer l'action de coincement.

5. Un dispositif anti-retour selon la revendication 1, dans lequel ledit organe de maintien est divisé par lesdits trous de maintien en une pluralité de blocs arqués, dans ladite direction circonférentielle, et chaque dit organe de roulement est interposé entre une paire adjacente correspondante desdits blocs arqués.
